# EUROPEAN PATENT APPLICATION

(11) **EP 3 587 072 A1**
(43) Date of publication of application: **01.01.2020**
(21) Application number: 18181047.4
(22) Date of filing: 30.06.2018
(51) Int. Cl.: B29C 64/106, B29C 64/393, B33Y 10/00, B33Y 40/00, B33Y 80/00, B33Y 99/00, B33Y 50/02, H04N 1/60, B41J 2/21, A61C 13/00

(54) **COLOR MATCHING FOR ADDITIVE MANUFACTURING**

(71) Applicant: SABIC Global Technologies B.V., 4612 PX Bergen op Zoom (NL)
(72) Inventor: KLEI, Steven Raymond, Selkirk, NY 12158 (US); GRIESHABER, Sarah E., Glenmont, NY New York 12077 (US)
(74) Representative: Elzaburu S.L.P.

(57) **Abstract**

A method for matching color of a part to be printed in an additive manufacturing process, includes: (a) blending a color formulation, the color formulation including a thermoplastic polymer and at least one colorant; (b) printing a color chip from the color formulation in an additive manufacturing process; (c) at least one of measuring or observing a color of the color chip; (d) comparing the color of the color chip to a color of a reference, wherein the reference represents a color of the part to be printed in an additive manufacturing process; and (e) repeating steps (a) through (d) by blending a new color formulation that more closely matches the color of the reference until the color of the color chip matches the color of the reference within an acceptable variance. A color chip formed in the color matching process is also described.

## Description

### FIELD OF THE DISCLOSURE

The present disclosure relates to methods for color matching an additive manufacturing part, and in particular to a method that includes additively manufacturing a color chip during the color matching process.

### BACKGROUND OF THE DISCLOSURE

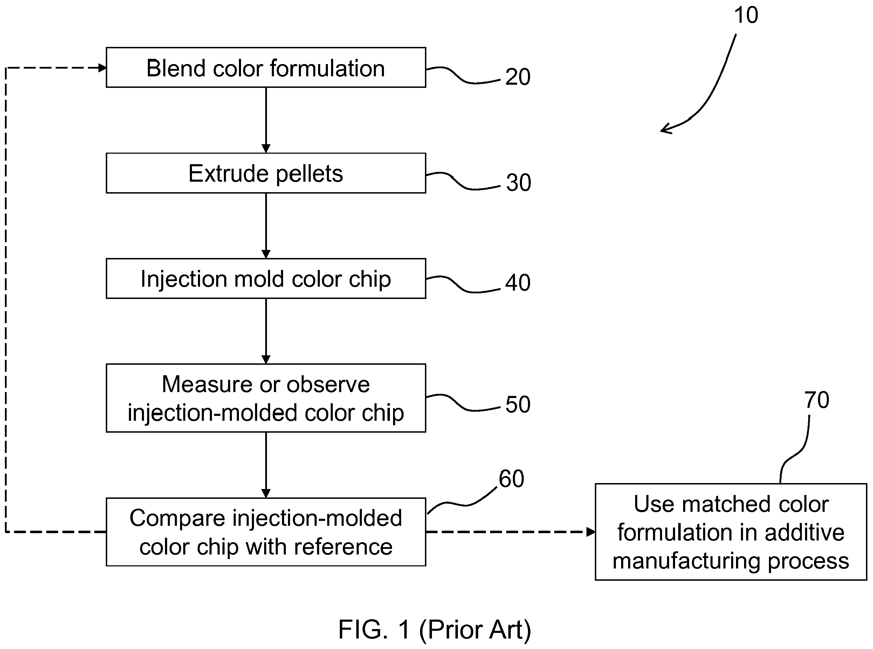

Additive manufacturing (3D printing) is a growing industry and Original Equipment Manufacturers (OEMs) want the design freedom associated with custom color-matched material. Color matching for 3D printing applications - specifically filament extrusion based methods such as fused filament fabrication (FFF) - is currently performed in a way that was developed for injection molding, using injection-molded specimens to measure the color during the iterative color matching process. As one example of a conventional color matching method 10 illustrated in FIG. 1, a color formulation is blended (step 20) and the color formulation is extruded into pellets (step 30). A color chip is extruded from the pellets (step 40), and the color of the injection-molded color chip is measured or observed (step 50) and compared to a reference that represents the desired color of the part to be printed (step 60). If the color of the color chip matches the reference within an acceptable variance then the color formulation is used to print the part in an additive manufacturing process (step 70).

In contrast to the color matching process described above in which the color chip only undergoes one extrusion step, resin is extruded twice during the additive manufacturing process: first to form a compounded and pelletized form (similar to step 30 above); and second to form a filament having a controlled diameter. In addition, the additive manufacturing process further heats the filament (resin), applying another heat history to the resin. Multiple heat histories impart additional color to the resin (making it darker and yellower), which limits the achievable color space for the color matcher. That is, the development of light colors and chromatic colors is limited. In addition, when color is matched using injection-molded chips, the color of the injection-molded color chip will differ from an additively manufactured part made from the same formulation because the additively manufactured part has undergone the second extrusion process - and the actual additive manufacturing process - that was not used in the process for making the color chip. The color difference between the two would be difficult to estimate for the customer requesting the color match.

Commercial filament manufacturers have not adequately addressed these challenges. One leading manufacturer offers only very few colors for their filaments. Further, while custom color matching is available, it must be done by an outside vendor as filament manufacturers are not believed to have in-house color matching capability. In addition, external color masterbatch suppliers do not have filament extrusion capability. Thus, consolidated filament extrusion and color matching capability is not available in a single location.

These and other shortcomings are addressed by aspects of the present disclosure.

### SUMMARY

Aspects of the disclosure relate to a method for matching color of a part to be printed in an additive manufacturing process, including: (a) blending a color formulation, the color formulation including a thermoplastic polymer and at least one colorant; (b) printing a color chip from the color formulation in an additive manufacturing process; (c) at least one of measuring or observing a color of the color chip; (d) comparing the color of the color chip to a color of a reference, wherein the reference represents a color of the part to be printed in an additive manufacturing process; and (e) repeating steps (a) through (d) by blending a new color formulation that more closely matches the color of the reference until the color of the color chip matches the color of the reference within an acceptable variance.

Aspects of the disclosure further relate to a printed color chip formed in a color matching process. The printed color chip includes a color formulation including a thermoplastic polymer and at least one colorant. The color matching process includes: (a) blending the color formulation; (b) printing the color chip from the color formulation in an additive manufacturing process; (c) at least one of measuring or observing a color of the color chip; (d) comparing the color of the color chip to a color of a reference, wherein the reference represents a color of a part to be printed in an additive manufacturing process; and (e) repeating steps (a) through (d) by blending a new color formulation that more closely matches the color of the reference until the color of the color chip matches the color of the reference within an acceptable variance.

Yet further aspects of the disclosure relate to methods for matching color of a part to be printed in an additive manufacturing process, including: (a) blending a color formulation, the color formulation including a thermoplastic polymer and at least one colorant; (b) optionally extruding pellets from the color formulation; (c) extruding filament from the color formulation or from the pellets; (d) printing a color chip from the filament in an additive manufacturing process; (e) at least one of measuring or observing a color of the color chip; (f) comparing the color of the color chip to a color of a reference, wherein the reference represents a color of the part to be printed in an additive manufacturing process; and (g) repeating steps (a) through (f) by blending a new color formulation that more closely matches the color of the reference until the color of the color chip matches the color of the reference within an acceptable variance.

Certain aspects of the disclosure relate to a printed color chip formed in a color matching process, the printed color chip including a color formulation including a thermoplastic polymer and at least one colorant, the color matching process including the steps of: (a) blending the color formulation; (b) optionally extruding pellets from the color formulation; (c) extruding filament from the color formulation or from the pellets; (d) printing the color chip from the filament in an additive manufacturing process; (e) at least one of measuring or observing a color of the color chip; (f) comparing the color of the color chip to a color of a reference, wherein the reference represents a color of a part to be printed in an additive manufacturing process; and (g) repeating steps (a) through (f) by blending a new color formulation that more closely matches the color of the reference until the color of the color chip matches the color of the reference within an acceptable variance.

Particular aspects of the disclosure relate to methods for matching color of a part to be printed in an additive manufacturing process, the method including the steps of: (a) blending a color formulation, the color formulation including a thermoplastic polymer and at least one colorant; (b) optionally extruding pellets from the color formulation; (c) printing a color chip from the color formulation or the pellets in an additive manufacturing process; (d) at least one of measuring or observing a color of the color chip; (e) comparing the color of the color chip to a color of a reference, wherein the reference represents a color of the part to be printed in an additive manufacturing process; and (f) repeating steps (a) through (e) by blending a new color formulation that more closely matches the color of the reference until the color of the color chip matches the color of the reference within an acceptable variance. In some aspects the additive manufacturing process is a powder fusion or a large format additive manufacturing (LFAM) process.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a process diagram showing a conventional method for color matching.
FIG. 2 is a process diagram showing a color matching method according to aspects of the disclosure.
FIG. 3 is an XYZ plane graph illustrating printing of a part in a flat (XY), upright (ZX) and on-edge (XZ) direction.

### DETAILED DESCRIPTION

The present disclosure can be understood more readily by reference to the following detailed description of the disclosure and the Examples included therein. In various aspects, the present disclosure pertains to methods for matching color of a part to be printed in an additive manufacturing process, the method including: (a) blending a color formulation, the color formulation including a thermoplastic polymer and at least one colorant; (b) optionally extruding pellets from the color formulation; (c) extruding filament from the color formulation or from the pellets; (d) printing a color chip from the filament in an additive manufacturing process; (e) at least one of measuring or observing a color of the color chip; (f) comparing the color of the color chip to a color of a reference that represents a color of the part to be printed in an additive manufacturing process; and (g) repeating steps (a) through (f) by blending a new color formulation that more closely matches the color of the reference until the color of the color chip matches the color of the reference within an acceptable variance.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer" includes mixtures of two or more thermoplastic polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optionally extruding pellets from the color formulation" means that the step of extruding pellets from the color formulation can or cannot be included and that the description includes methods in which pellets are extruded and in which they are not extruded.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Color Matching Methods

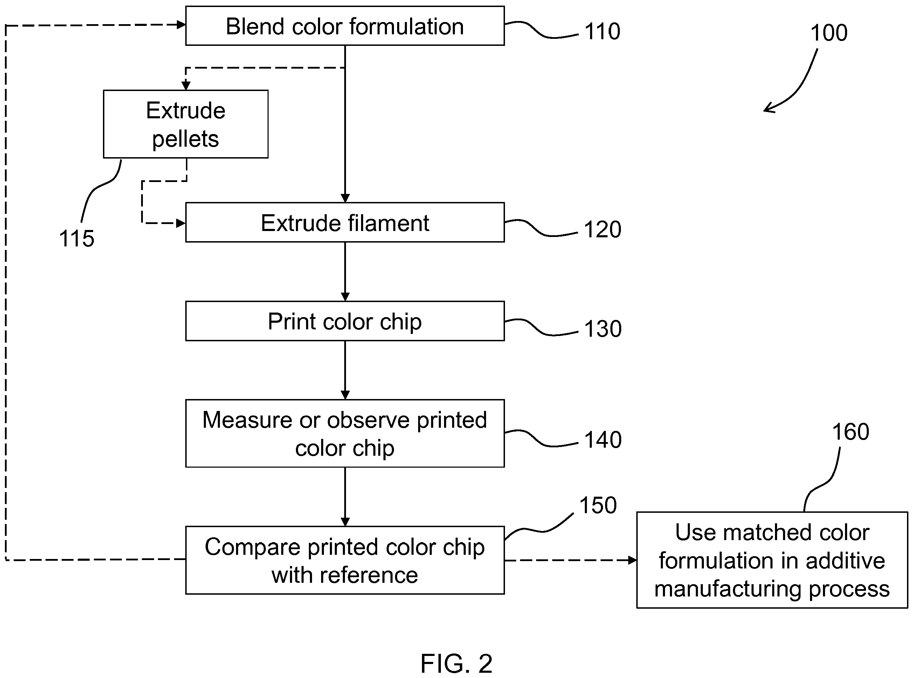

With reference to FIG. 2, aspects of the disclosure relate to a method 100 for matching color of a part to be printed in an additive manufacturing process. In general terms, the method includes, at step 110, blending a color formulation including a thermoplastic polymer and at least one colorant. The color formulation is optionally extruded into pellets at step 115. At step 120 filament is extruded from the color formulation (if step 115 is not performed) or from the pellets (if step 115 is performed). A color chip is printed from the filament in an additive manufacturing process at step 130, and the color of the printed color chip is measured or observed at step 140. The color of the color chip is then compared to a reference at step 150. The reference represents a color of the part to be printed in an additive manufacturing process. If the color of the color chip matches the color of the reference within an acceptable variance then the matched color formulation is used to print the part in the additive manufacturing process, at step 160. If the color of the color chip does not match the color of the reference within an acceptable variance, then steps 110 through 150 are repeated by blending a new color formulation. The process is repeated until the color of the color chip matches the color of the reference within an acceptable variance.

The method 100 described herein provides at least the following advantages over conventional color matching processes: (1) filament could be extruded directly from the color formulation if the optional step of extruding the color formulation into pellets is not performed, simplifying the method when used with filament extruders that do not require pellets; and (2) the color chip is additively manufactured from extruded filament (which is optionally formed from extruded pellets), which more closely matches the heating profile provided on the additively manufactured part, allowing for a better color match.

As noted, a color formulation including a thermoplastic polymer and at least one colorant is blended at step 110. The colorant may include any suitable material, and includes but is not limited to dyes and pigments.

Any thermoplastic polymer suitable for use in additive manufacturing processes may be used in the method 100. Exemplary thermoplastic polymers include, but are not limited to, polyetherimide (PEI), polycarbonate (PC), PC copolymer, PC-siloxane copolymer, polyestercarbonate copolymer, polyestercarbonate-polysiloxane copolymer, polyethylene terephthalate (PET), polyphenylsulfone (PPSU), polyphenylene sulfide (PPS), polyether ether ketone (PEEK), polyimide, poly(ether sulfone) (PES), poly(p-phenylene oxide) (PPO), polysulfone (PSU), polyaryletherketone (PAEK), acrylonitrile-butadiene-styrene (ABS), acrylonitrile-styrene-acrylate (ASA), polybutylene terephthalate (PBT), copolymers thereof, blends thereof, and combinations thereof.

In some aspects the color formulation may include a filler. Exemplary fillers include, but are not limited to, carbon fibers, glass fibers, ceramic fibers, milled fibers, minerals, and combinations thereof.

As noted, the step of extruding filament (step 120) can be performed directly from the blended color formulation (formed at step 110) or the blended color formulation can first be extruded into pellets (step 115). It will be understood that if the step of extruding the color formulation into pellets (step 115) is omitted, the color formulation would be subjected to one less extrusion/heating step. Elimination of this additional heating step/heat history allows for formation of filaments of lower color (i.e., lighter, less yellow), which in turn would allow lighter and more chromatic colors to be achieved during color matching. In addition, tinted "natural" colored transparent resins would also be less yellow and more "water clear." Because raw materials for the filament extrusion may be present in a variety of physical forms (e.g., powder, pellet, liquid, etc.), multiple feeders for these raw materials, as well as pre-blending of raw materials prior to extrusion (including high intensity mixing), may be beneficial to making uniformly colored, mixed, and dispersed formulations. The filament thus formed will be of a tightly controlled diameter distribution. If the part to be printed in the additive manufacturing process will be made using filament formed directly from a blended thermoplastic composition (rather than from pellets), then it may be desirable in some aspects to omit the pellet formation step (step 115) when performing the color matching method 100, so that the part to be printed and the printed color chip (formed at step 130) will have both been subjected to the same heat history; this will allow for a more accurate color formulation to be identified during the method 100.

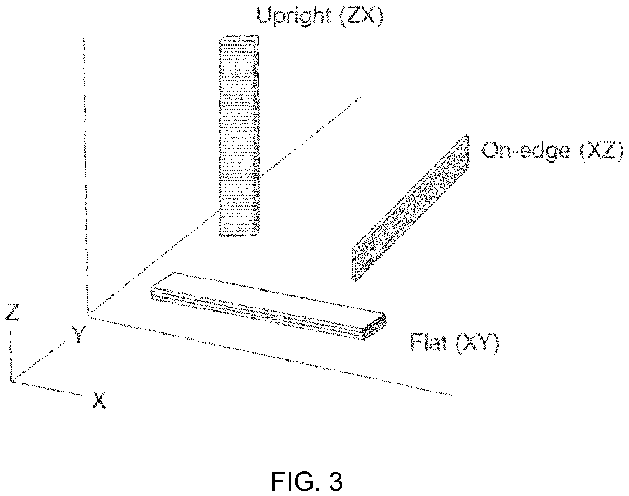

As noted, at step 130 the color chip is printed from the filament in an additive manufacturing process. This is in contrast to conventional color matching methods in which a color chip is injection molded. The color chip may be printed in any configuration. In some aspects it may be desirable to print the color chip in a configuration that corresponds to the configuration of the part to be printed in an additive manufacturing process. This allows the color of the color chip to more closely match the desired color of the part to be printed. With reference to FIG. 3, in some aspects the color chip is printed in an upright (ZX), on-edge (XZ) or flat (XY) configuration. In some aspects the printing orientation for each iteration is the same so as to minimize variation in the color measurement/observation. In addition, it may be desirable for the color chip to have a uniformly flat surface to minimize variation in color measurement/observation.

The step of measuring or observing the color of the printed color chip (step 140) can be performed using an optical sensor to measure the color or visual inspection to observe the color. One or both of measuring and observing the color may be performed; i.e., the color of the color chip could be both observed and measured.

The step of comparing the printed color chip with a reference (step 150) can be performed by visually comparing the color of the color chip to the color of the reference in some aspects. Alternatively, the color comparison can be done with a color measuring instrument (e.g., a spectrophotometer). The reference represents a color of the part to be printed in an additive manufacturing process.

As noted, if the color of the color chip matches the color of the reference within an acceptable variance then the matched color formulation is used to print the part in the additive manufacturing process, at step 160. If the color of the color chip does not match the color of the reference within an acceptable variance, then steps 110 through 150 are repeated by blending a new color formulation. The process is repeated until the color of the color chip matches the color of the reference within an acceptable variance. Any desirable variance can be used. In addition, conventional color comparison charts or standards can be used. Exemplary color standards include, but are not limited to, Pantone and RAL standards. Such color standards are typically available as paper "fan" cards, which enable them to be measured with a spectrophotometer. In further aspects, a plastic reference standard that matches the desired color of the printed part may be provided by a customer; it may be desirable in some aspects to use a plastic standard because paper color standards may not as accurately depict a color of a printed plastic part.

In some aspects the additive manufacturing process is a fused filament fabrication (FFF) process. In further aspects the additive manufacturing process is a powder fusion (including but not limited to selective laser sintering and jet fusion) or a large format additive manufacturing (LFAM) process. If an additive manufacture process is used that does not incorporate filament into the process (e.g., powder fusion and LFAM processes), the step of extruding filament from the color formulation or the pellets (step 120 above) may be omitted, and the color chip may be printed directly from the color formulation or - if used in the process - the pellets.

### Printed Color Chip Formed in a Color Matching Process

Aspects of the disclosure further relate to a printed color chip formed in a color matching process. The printed color chip includes a color formulation including a thermoplastic polymer and at least one colorant. The color matching process includes the steps of: (a) blending the color formulation; (b) optionally extruding pellets from the color formulation; (c) extruding filament from the color formulation or from the pellets; (d) printing the color chip from the filament in an additive manufacturing process; (e) at least one of measuring or observing a color of the color chip; (f) comparing the color of the color chip to a color of a reference, wherein the reference represents a color of a part to be printed in an additive manufacturing process; and (g) repeating steps (a) through (f) by blending a new color formulation that more closely matches the color of the reference until the color of the color chip matches the color of the reference within an acceptable variance.

The color chip formed according to the color matching process can include the components described above for the method 100 and may be formed according to the method 100 described above.

### Color Matching Method for Powder Fusion and LFAM Processes

Yet further aspects of the disclosure relate to methods for matching color of a part to be printed in an additive manufacturing process. The method includes: (a) blending a color formulation, the color formulation including a thermoplastic polymer and at least one colorant; (b) optionally extruding pellets from the color formulation; (c) printing a color chip from the color formulation or the pellets in an additive manufacturing process; (d) at least one of measuring or observing a color of the color chip; (e) comparing the color of the color chip to a color of a reference, wherein the reference represents a color of the part to be printed in an additive manufacturing process; and (f) repeating steps (a) through (e) by blending a new color formulation that more closely matches the color of the reference until the color of the color chip matches the color of the reference within an acceptable variance, wherein the additive manufacturing process is a powder fusion or a large format additive manufacturing (LFAM) process.

The color chip formed according to this color matching method can include the components described above for the method 100. The steps of this method are similar to those of the method 100 described above, with the exception that the step of extruding filament from the color formulation or the pellets (step 120) is omitted. This step is not necessary in powder fusion and LFAM processes that do not utilize filament. The color chip may thus be printed directly from the color formulation or, if formed, the pellets.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.
Aspect 1. A method for matching color of a part to be printed in an additive manufacturing process, the method comprising the steps of:
   (a) blending a color formulation, the color formulation comprising a thermoplastic polymer and at least one colorant;
   (b) optionally extruding pellets from the color formulation;
   (c) extruding filament from the color formulation or from the pellets;
   (d) printing a color chip from the filament in an additive manufacturing process;
   (e) at least one of measuring or observing a color of the color chip;
   (f) comparing the color of the color chip to a color of a reference, wherein the reference represents a color of the part to be printed in an additive manufacturing process; and
   (g) repeating steps (a) through (f) by blending a new color formulation that more closely matches the color of the reference until the color of the color chip matches the color of the reference within an acceptable variance.
Aspect 2. The method according to Aspect 1, wherein the color chip is printed in an upright, on-edge or flat configuration that corresponds to a configuration of the part to be printed in an additive manufacturing process.
Aspect 3. The method according to Aspect 1 or 2, wherein the additive manufacturing process is a fused filament fabrication (FFF) process.
Aspect 4. The method according to any of Aspects 1 to 3, wherein:
   step (e) comprises measuring a color of the color chip using an optical sensor; and
   step (f) is performed using a computer system that includes color-matching software.
Aspect 5. The method according to any of Aspects 1 to 3, wherein:
   step (e) comprises observing a color of the color chip by visual inspection; and
   step (f) is performed by visually comparing the color of the color chip to the color of the reference.
Aspect 6. The method according to any of Aspects 1 to 5, wherein step (b) is performed and step (c) comprises extruding filament from the pellets.
Aspect 7. The method according to any of Aspects 1 to 5, wherein step (b) is not performed and step (c) comprises extruding filament from the color formulation.
Aspect 8. The method according to any of Aspects 1 to 7, wherein the thermoplastic polymer is selected from the group consisting of: polyetherimide (PEI); polycarbonate (PC); PC copolymer; PC-siloxane copolymer; polyestercarbonate copolymer; polyestercarbonate-polysiloxane copolymer; polyethylene terephthalate (PET); polyphenylsulfone (PPSU); polyphenylene sulfide (PPS); polyether ether ketone (PEEK); polyimide; poly(ether sulfone) (PES); poly(p-phenylene oxide) (PPO); polysulfone (PSU); polyaryletherketone (PAEK); acrylonitrile-butadiene-styrene (ABS); acrylonitrile-styrene-acrylate (ASA); polybutylene terephthalate (PBT); copolymers thereof; blends thereof; and combinations thereof.
Aspect 9. The method according to any of Aspects 1 to 8, wherein the color formulation further comprises a filler.
Aspect 10. The method according to Aspect 9, wherein the filler is selected from the group consisting of carbon fibers; glass fibers; ceramic fibers; milled fibers; minerals; and combinations thereof.
Aspect 11. A color chip formed according to the method of any of Aspects 1 to 10.
Aspect 12. A printed color chip formed in a color matching process, the printed color chip comprising a color formulation comprising a thermoplastic polymer and at least one colorant, the color matching process comprising the steps of:
   (a) blending the color formulation;
   (b) optionally extruding pellets from the color formulation;
   (c) extruding filament from the color formulation or from the pellets;
   (d) printing the color chip from the filament in an additive manufacturing process;
   (e) at least one of measuring or observing a color of the color chip;
   (f) comparing the color of the color chip to a color of a reference, wherein the reference represents a color of a part to be printed in an additive manufacturing process; and
   (g) repeating steps (a) through (f) by blending a new color formulation that more closely matches the color of the reference until the color of the color chip matches the color of the reference within an acceptable variance.
Aspect 13. The printed color chip according to Aspect 12, wherein the color chip is printed in an upright, on-edge or flat configuration that corresponds to a configuration of the part to be printed in an additive manufacturing process.
Aspect 14. The printed color chip according to Aspects 12 or 13, wherein the additive manufacturing process is a fused filament fabrication (FFF) process.
Aspect 15. The printed color chip according to any of Aspects 12 to 14, wherein:
   step (e) comprises measuring a color of the color chip using an optical sensor; and
   step (f) is performed using a computer system that includes color-matching software.
Aspect 16. The printed color chip according to any of Aspects 12 to 14, wherein:
   step (e) comprises observing a color of the color chip by visual inspection; and
   step (f) is performed by visually comparing the color of the color chip to the color of the reference.
Aspect 17. The printed color chip according to any of Aspects 12 to 16, wherein step (b) is performed and step (c) comprises extruding filament from the pellets.
Aspect 18. The printed color chip according to any of Aspects 12 to 16, wherein step (b) is not performed and step (c) comprises extruding filament from the color formulation.
Aspect 19. The printed color chip according to any of Aspects 12 to 18, wherein the thermoplastic polymer is selected from the group consisting of: polyetherimide (PEI); polycarbonate (PC); PC copolymer; PC-siloxane copolymer; polyestercarbonate copolymer; polyestercarbonate-polysiloxane copolymer; polyethylene terephthalate (PET); polyphenylsulfone (PPSU); polyphenylene sulfide (PPS); polyether ether ketone (PEEK); polyimide; poly(ether sulfone) (PES); poly(p-phenylene oxide) (PPO); polysulfone (PSU); polyaryletherketone (PAEK); acrylonitrile-butadiene-styrene (ABS); acrylonitrile-styrene-acrylate (ASA); polybutylene terephthalate (PBT); copolymers thereof; blends thereof; and combinations thereof.
Aspect 20. The printed color chip according to any of Aspects 12 to 19, wherein the color formulation further comprises a filler.
Aspect 21. The printed color chip according to Aspect 20, wherein the filler is selected from the group consisting of carbon fibers; glass fibers; ceramic fibers; milled fibers; minerals; and combinations thereof.
Aspect 22. A method for matching color of a part to be printed in an additive manufacturing process, the method comprising the steps of:
   (a) blending a color formulation, the color formulation comprising a thermoplastic polymer and at least one colorant;
   (b) optionally extruding pellets from the color formulation;
   (c) printing a color chip from the color formulation or the pellets in an additive manufacturing process;
   (d) at least one of measuring or observing a color of the color chip;
   (e) comparing the color of the color chip to a color of a reference, wherein the reference represents a color of the part to be printed in an additive manufacturing process; and
   (f) repeating steps (a) through (e) by blending a new color formulation that more closely matches the color of the reference until the color of the color chip matches the color of the reference within an acceptable variance,
   wherein the additive manufacturing process is a powder fusion or a large format additive manufacturing (LFAM) process.
Aspect 23. The method according to Aspect 22, wherein the color chip is printed in an upright, on-edge or flat configuration that corresponds to a configuration of the part to be printed in an additive manufacturing process.
Aspect 24. The method according to Aspect 22 or 23, wherein:
   step (e) comprises measuring a color of the color chip using an optical sensor; and
   step (f) is performed using a computer system that includes color-matching software.
Aspect 25. The method according to Aspect 22 or 23, wherein:
   step (e) comprises observing a color of the color chip by visual inspection; and
   step (f) is performed by visually comparing the color of the color chip to the color of the reference.
Aspect 26. The method according to any of Aspects 22 to 25, wherein the thermoplastic polymer is selected from the group consisting of: polyetherimide (PEI); polycarbonate (PC); PC copolymer; PC-siloxane copolymer; polyestercarbonate copolymer; polyestercarbonate-polysiloxane copolymer; polyethylene terephthalate (PET); polyphenylsulfone (PPSU); polyphenylene sulfide (PPS); polyether ether ketone (PEEK); polyimide; poly(ether sulfone) (PES); poly(p-phenylene oxide) (PPO); polysulfone (PSU); polyaryletherketone (PAEK); acrylonitrile-butadiene-styrene (ABS); acrylonitrile-styrene-acrylate (ASA); polybutylene terephthalate (PBT); copolymers thereof; blends thereof; and combinations thereof.
Aspect 27. The method according to any of Aspects 22 to 26, wherein the color formulation further comprises a filler.
Aspect 28. The method according to Aspect 27, wherein the filler is selected from the group consisting of carbon fibers; glass fibers; ceramic fibers; milled fibers; minerals; and combinations thereof.
Aspect 29. A color chip formed according to the method of any of Aspects 22 to 28.
Aspect 30. A method for matching color of a part to be printed in an additive manufacturing process, the method comprising the steps of:
   (a) blending a color formulation, the color formulation comprising a thermoplastic polymer and at least one colorant;
   (b) printing a color chip from the color formulation in an additive manufacturing process;
   (c) at least one of measuring or observing a color of the color chip;
   (d) comparing the color of the color chip to a color of a reference, wherein the reference represents a color of the part to be printed in an additive manufacturing process; and
   (e) repeating steps (a) through (d) by blending a new color formulation that more closely matches the color of the reference until the color of the color chip matches the color of the reference within an acceptable variance.
Aspect 31. The method according to claim 30, wherein the additive manufacturing process is a fused filament fabrication (FFF), powder fusion or large format additive manufacturing process.
Aspect 32. The method according to claim 30 or 31, further comprising:
   (a1) optionally extruding pellets from the color formulation; and
   (a2) extruding filament from the color formulation or from the pellets.
Aspect 33. The method according to any of claims 30 to 32, wherein:
   step (c) comprises measuring a color of the color chip using an optical sensor; and
   step (d) is performed using a computer system that includes color-matching software.
Aspect 34. The method according to any of claims 30 to 32, wherein:
   step (c) comprises observing a color of the color chip by visual inspection; and
   step (d) is performed by visually comparing the color of the color chip to the color of the reference.
Aspect 35. The method according to any of claims 32 to 34, wherein step (a1) is performed, step (a2) comprises extruding filament from the pellets, and the color formulation in step (b) is in a form of the extruded filament.
Aspect 36. The method according to any of claims 32 to 34, wherein step (a1) is not performed, step (a2) comprises extruding filament from the color formulation, and the color formulation in step (b) is in a form of the extruded filament.
Aspect 37. The method according to any of claims 30 to 36, wherein the thermoplastic polymer is selected from the group consisting of: polyetherimide (PEI); polycarbonate (PC); PC copolymer; PC-siloxane copolymer; polyestercarbonate copolymer; polyestercarbonate-polysiloxane copolymer; polyethylene terephthalate (PET); polyphenylsulfone (PPSU); polyphenylene sulfide (PPS); polyether ether ketone (PEEK); polyimide; poly(ether sulfone) (PES); poly(p-phenylene oxide) (PPO); polysulfone (PSU); polyaryletherketone (PAEK); acrylonitrile-butadiene-styrene (ABS); acrylonitrile-styrene-acrylate (ASA); polybutylene terephthalate (PBT); copolymers thereof; blends thereof; and combinations thereof.
Aspect 38. The method according to any of claims 30 to 37, wherein the color formulation further comprises a filler, wherein the filler is selected from the group consisting of carbon fibers; glass fibers; ceramic fibers; milled fibers; minerals; and combinations thereof.
Aspect 39. A printed color chip formed in a color matching process, the printed color chip comprising a color formulation comprising a thermoplastic polymer and at least one colorant, the color matching process comprising the steps of:
   (a) blending the color formulation;
   (b) printing the color chip from the color formulation in an additive manufacturing process;
   (c) at least one of measuring or observing a color of the color chip;
   (d) comparing the color of the color chip to a color of a reference, wherein the reference represents a color of a part to be printed in an additive manufacturing process; and
   (e) repeating steps (a) through (d) by blending a new color formulation that more closely matches the color of the reference until the color of the color chip matches the color of the reference within an acceptable variance.
Aspect 40. The printed color chip according to claim 39, wherein:
   step (c) comprises measuring a color of the color chip using an optical sensor; and
   step (d) is performed using a computer system that includes color-matching software.
Aspect 41. The printed color chip according to claim 39, wherein:
   step (c) comprises observing a color of the color chip by visual inspection; and
   step (d) is performed by visually comparing the color of the color chip to the color of the reference.
Aspect 42. The printed color chip according to any of claims 39 to 41, wherein the additive manufacturing process is a fused filament fabrication, powder fusion or large format additive manufacturing process.
Aspect 43. The printed color chip according to any of claims 39 to 42, wherein the color matching process further comprises:
   (a1) optionally extruding pellets from the color formulation; and
   (a2) extruding filament from the color formulation or from the pellets
   wherein the color formulation in step (b) is in a form of the extruded filament.
Aspect 44. The printed color chip according to any of claims 39 to 43, wherein the thermoplastic polymer is selected from the group consisting of: polyetherimide (PEI); polycarbonate (PC); PC copolymer; PC-siloxane copolymer; polyestercarbonate copolymer; polyestercarbonate-polysiloxane copolymer; polyethylene terephthalate (PET); polyphenylsulfone (PPSU); polyphenylene sulfide (PPS); polyether ether ketone (PEEK); polyimide; poly(ether sulfone) (PES); poly(p-phenylene oxide) (PPO); polysulfone (PSU); polyaryletherketone (PAEK); acrylonitrile-butadiene-styrene (ABS); acrylonitrile-styrene-acrylate (ASA); polybutylene terephthalate (PBT); copolymers thereof; blends thereof; and combinations thereof.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or nonvolatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A method for matching color of a part to be printed in an additive manufacturing process, the method comprising the steps of:
(a) blending a color formulation, the color formulation comprising a thermoplastic polymer and at least one colorant;
(b) printing a color chip from the color formulation in an additive manufacturing process;
(c) at least one of measuring or observing a color of the color chip;
(d) comparing the color of the color chip to a color of a reference, wherein the reference represents a color of the part to be printed in an additive manufacturing process; and
(e) repeating steps (a) through (d) by blending a new color formulation that more closely matches the color of the reference until the color of the color chip matches the color of the reference within an acceptable variance.

2. The method according to claim 1, wherein the additive manufacturing process is a fused filament fabrication (FFF), powder fusion or large format additive manufacturing process.

3. The method according to claim 1 or 2, further comprising:
(a1) optionally extruding pellets from the color formulation; and
(a2) extruding filament from the color formulation or from the pellets.

4. The method according to any of claims 1 to 3, wherein:
step (c) comprises measuring a color of the color chip using an optical sensor; and
step (d) is performed using a computer system that includes color-matching software.

5. The method according to any of claims 1 to 3, wherein:
step (c) comprises observing a color of the color chip by visual inspection; and
step (d) is performed by visually comparing the color of the color chip to the color of the reference.

6. The method according to any of claims 3 to 5, wherein step (a1) is performed, step (a2) comprises extruding filament from the pellets, and the color formulation in step (b) is in a form of the extruded filament.

7. The method according to any of claims 3 to 5, wherein step (a1) is not performed, step (a2) comprises extruding filament from the color formulation, and the color formulation in step (b) is in a form of the extruded filament.

8. The method according to any of claims 1 to 7, wherein the thermoplastic polymer is selected from the group consisting of: polyetherimide (PEI); polycarbonate (PC); PC copolymer; PC-siloxane copolymer; polyestercarbonate copolymer; polyestercarbonate-polysiloxane copolymer; polyethylene terephthalate (PET); polyphenylsulfone (PPSU); polyphenylene sulfide (PPS); polyether ether ketone (PEEK); polyimide; poly(ether sulfone) (PES); poly(p-phenylene oxide) (PPO); polysulfone (PSU); polyaryletherketone (PAEK); acrylonitrile-butadiene-styrene (ABS); acrylonitrile-styrene-acrylate (ASA); polybutylene terephthalate (PBT); copolymers thereof; blends thereof; and combinations thereof.

9. The method according to any of claims 1 to 8, wherein the color formulation further comprises a filler, wherein the filler is selected from the group consisting of carbon fibers; glass fibers; ceramic fibers; milled fibers; minerals; and combinations thereof.

10. A printed color chip formed in a color matching process, the printed color chip comprising a color formulation comprising a thermoplastic polymer and at least one colorant, the color matching process comprising the steps of:
(a) blending the color formulation;
(b) printing the color chip from the color formulation in an additive manufacturing process;
(c) at least one of measuring or observing a color of the color chip;
(d) comparing the color of the color chip to a color of a reference, wherein the reference represents a color of a part to be printed in an additive manufacturing process; and
(e) repeating steps (a) through (d) by blending a new color formulation that more closely matches the color of the reference until the color of the color chip matches the color of the reference within an acceptable variance.

11. The printed color chip according to claim 10, wherein:
step (c) comprises measuring a color of the color chip using an optical sensor; and
step (d) is performed using a computer system that includes color-matching software.

12. The printed color chip according to claim 10, wherein:
step (c) comprises observing a color of the color chip by visual inspection; and
step (d) is performed by visually comparing the color of the color chip to the color of the reference.

13. The printed color chip according to any of claims 10 to 12, wherein the additive manufacturing process is a fused filament fabrication, powder fusion or large format additive manufacturing process.

14. The printed color chip according to any of claims 10 to 13, wherein the color matching process further comprises:
(a1) optionally extruding pellets from the color formulation; and
(a2) extruding filament from the color formulation or from the pellets
wherein the color formulation in step (b) is in a form of the extruded filament.

15. The printed color chip according to any of claims 10 to 14, wherein the thermoplastic polymer is selected from the group consisting of: polyetherimide (PEI); polycarbonate (PC); PC copolymer; PC-siloxane copolymer; polyestercarbonate copolymer; polyestercarbonate-polysiloxane copolymer; polyethylene terephthalate (PET); polyphenylsulfone (PPSU); polyphenylene sulfide (PPS); polyether ether ketone (PEEK); polyimide; poly(ether sulfone) (PES); poly(p-phenylene oxide) (PPO); polysulfone (PSU); polyaryletherketone (PAEK); acrylonitrile-butadiene-styrene (ABS); acrylonitrile-styrene-acrylate (ASA); polybutylene terephthalate (PBT); copolymers thereof; blends thereof; and combinations thereof.

## Amended claims

### Amended claims in accordance with Rule 137(2) EPC.

1. A method for matching color of a part to be printed in an additive manufacturing process, the method comprising the steps of:
(a) blending a color formulation, the color formulation comprising a thermoplastic polymer and at least one colorant;
(b) printing a color chip from the color formulation in an additive manufacturing process;
(c) at least one of measuring or observing a color of the color chip;
(d) comparing the color of the color chip to a color of a reference, wherein the reference represents a color of the part to be printed in an additive manufacturing process; and
(e) repeating steps (a) through (d) by blending a new color formulation and a new color chip until the color of the new color chip matches the color of the reference within an acceptable variance.

2. The method according to claim 1, wherein the additive manufacturing process is a fused filament fabrication (FFF), powder fusion or large format additive manufacturing process.

3. The method according to claim 1 or 2, further comprising:
(a1) optionally extruding pellets from the color formulation; and
(a2) extruding filament from the color formulation or from the pellets.

4. The method according to any of claims 1 to 3, wherein:
step (c) comprises measuring a color of the color chip using an optical sensor; and
step (d) is performed using a computer system that includes color-matching software.

5. The method according to any of claims 1 to 3, wherein:
step (c) comprises observing a color of the color chip by visual inspection; and
step (d) is performed by visually comparing the color of the color chip to the color of the reference.

6. The method according to any of claims 3 to 5, wherein step (a1) is performed, step (a2) comprises extruding filament from the pellets, and the color formulation in step (b) is in a form of the extruded filament.

7. The method according to any of claims 3 to 5, wherein step (a1) is not performed, step (a2) comprises extruding filament from the color formulation, and the color formulation in step (b) is in a form of the extruded filament.

8. The method according to any of claims 1 to 7, wherein the thermoplastic polymer is selected from the group consisting of: polyetherimide (PEI); polycarbonate (PC); PC copolymer; PC-siloxane copolymer; polyestercarbonate copolymer; polyestercarbonate-polysiloxane copolymer; polyethylene terephthalate (PET); polyphenylsulfone (PPSU); polyphenylene sulfide (PPS); polyether ether ketone (PEEK); polyimide; poly(ether sulfone) (PES); poly(p-phenylene oxide) (PPO); polysulfone (PSU); polyaryletherketone (PAEK); acrylonitrile-butadiene-styrene (ABS); acrylonitrile-styrene-acrylate (ASA); polybutylene terephthalate (PBT); copolymers thereof; blends thereof; and combinations thereof.

9. The method according to any of claims 1 to 8, wherein the color formulation further comprises a filler, wherein the filler is selected from the group consisting of carbon fibers; glass fibers; ceramic fibers; milled fibers; minerals; and combinations thereof.

10. A printed color chip formed in a color matching process, the printed color chip comprising a color formulation comprising a thermoplastic polymer and at least one colorant, the color matching process comprising the steps of:
(a) blending the color formulation;
(b) printing the color chip from the color formulation in an additive manufacturing process;
(c) measuring a color of the color chip using an optical sensor;
(d) comparing the color of the color chip to a color of a reference using a computer system that includes color-matching software, wherein the reference represents a color of a part to be printed in an additive manufacturing process; and
(e) repeating steps (a) through (d) by blending a new color formulation and a new color chip until the color of the new color chip matches the color of the reference within an acceptable variance.

11. The printed color chip according to claim 10, wherein the additive manufacturing process is a fused filament fabrication, powder fusion or large format additive manufacturing process.

12. The printed color chip according to any of claims 10 or 11, wherein the color matching process further comprises:
(a1) optionally extruding pellets from the color formulation; and
(a2) extruding filament from the color formulation or from the pellets wherein the color formulation in step (b) is in a form of the extruded filament.

13. The printed color chip according to any of claims 10 to 12, wherein the thermoplastic polymer is selected from the group consisting of: polyetherimide (PEI); polycarbonate (PC); PC copolymer; PC-siloxane copolymer; polyestercarbonate copolymer; polyestercarbonate-polysiloxane copolymer; polyethylene terephthalate (PET); polyphenylsulfone (PPSU); polyphenylene sulfide (PPS); polyether ether ketone (PEEK); polyimide; poly(ether sulfone) (PES); poly(p-phenylene oxide) (PPO); polysulfone (PSU); polyaryletherketone (PAEK); acrylonitrile-butadiene-styrene (ABS); acrylonitrile-styrene-acrylate (ASA); polybutylene terephthalate (PBT); copolymers thereof; blends thereof; and combinations thereof.

14. The printed color chip according to any of claims 10 to 13, wherein the color formulation further comprises a filler selected from the group consisting of: carbon fibers; glass fibers; ceramic fibers; milled fibers; minerals; and combinations thereof.
